# EUROPEAN PATENT APPLICATION

(11) **EP 4 687 198 A1**
(43) Date of publication of application: **04.02.2026**
(21) Application number: 25188190.0
(22) Date of filing: 08.07.2025
(51) Int. Cl.: H01M 50/107, H01M 50/186, H01M 50/533, H01M 50/534, H01M 50/536, H01M 50/54, H01M 50/586, H01M 50/591, H01M 50/593

(54) **ELECTRODE AND SECONDARY BATTERY**

(30) Priority: 30.07.2024 KR 20240100983
(71) Applicant: SAMSUNG SDI CO., LTD., Yongin-si, Gyeonggi-do 17084 (KR)
(72) Inventor: JANG, Tae Woong, 16678 Suwon-si (KR)
(74) Representative: Marks & Clerk LLP

(57) **Abstract**

An electrode includes a substrate, and a tab attached onto a surface of the substrate, the tab including a first cross section at a first height in a direction perpendicular to the substrate, and a second cross section at a second height in the direction perpendicular to the substrate, the first cross section and the second cross section having different cross-sectional areas.

## Description

### BACKGROUND

### 1. Field

The present disclosure relates to an electrode and a secondary battery.

### 2. Description of the Related Art

Secondary batteries are batteries that can be charged and discharged unlike primary batteries that cannot be (re)charged. Low-capacity secondary batteries are used in small portable electronic devices such as smartphones, feature phones, laptop computers, digital cameras, and camcorders, and large-capacity secondary batteries are used as power sources for driving motors and power storage batteries in hybrid electric vehicles, electric vehicles, etc. The secondary battery includes electrodes including a positive electrode and/or a negative electrode, an electrode assembly including the electrodes, a case that accommodates the electrode assembly, electrode terminals connected to the electrode assembly, etc.

The secondary battery may include a tab formed to extend from the electrode assembly for current collection during charging and discharging. For example, the tab may be attached to a portion of the electrode assembly and may extend from the electrode assembly.

The above information disclosed in this Background section is for enhancement of understanding of the background of the present disclosure, and therefore, it may contain information that does not constitute the related art.

### SUMMARY

An electrode according to an embodiment of the present disclosure includes a substrate, and a tab attached onto one surface of the substrate, wherein the tab includes a first cross section positioned at a first height in a direction perpendicular to the substrate, and a second cross section positioned at a second height in the direction perpendicular to the substrate, and the first cross section and the second cross section have different cross-sectional areas.

In some embodiments, the second height is greater than the first height, and the second cross section has a smaller cross-sectional area than the first cross section. In some embodiments, the tab has at least one of bow-shaped, triangular, trapezoidal, and step-like cross-sectional shapes perpendicular to the substrate.

In some embodiments, the tab includes a first tab and a second tab on at least one side of the first tab. In some embodiments, the second tab includes a molten metal or a solder paste on the at least one side of the first tab. The second tab may be formed by injecting a molten metal or solder paste into the at least one side of the first tab.

In some embodiments, the second tab includes a same material as the first tab.

In some embodiments, the electrode further comprises a first protective layer covering the tab and contacting the substrate, wherein a width of the first protective layer is greater than a width of the tab. In some embodiments, the electrode further comprises a second protective layer, the first protective layer and the second protective layer being on opposite surfaces of the substrate.

A secondary battery according to an embodiment of the present disclosure includes an electrode assembly formed by alternately stacking an electrode and a separator, and a case in which the electrode assembly is accommodated, wherein the electrode includes a substrate, and a tab attached onto one surface of the substrate, wherein the tab includes a first cross section positioned at a first height in a direction perpendicular to the substrate, and a second cross section positioned at a second height in the direction perpendicular to the substrate, and the first cross section and the second cross section have different cross-sectional areas.

In some embodiments, the second height is greater than the first height, and the second cross section has a smaller cross-sectional area than the first cross section. In some embodiments, the tab has at least one of bow-shaped, triangular, trapezoidal, and step-like cross-sectional shapes perpendicular to the substrate.

In some embodiments, the tab includes a first tab and a second tab on at least one side of the first tab, and the second tab includes a molten metal or solder paste on the at least one side of the first tab. The second tab may be formed by injecting a molten metal or solder paste into the at least one side of the first tab.

In some embodiments, the second tab includes a same material as the first tab.

In some embodiments, the electrode further includes a first protective layer covering the tab and contacting the substrate, a width of the first protective layer being greater than a width of the tab. In some embodiments, the electrode further includes a second protective layer. The second protective layer may be on the other surface of the substrate.

At least some of the above and other features of the invention are set out in the claims.

### BRIEF DESCRIPTION OF THE DRAWINGS

Features will become apparent to those of skill in the art by describing in detail embodiments with reference to the attached drawings, in which:
FIG. 1 is a schematic cross-sectional view illustrating a cylindrical secondary battery according to an embodiment of the present disclosure;
FIG. 2 is a schematic top view illustrating an electrode according to an embodiment of the present disclosure;
FIG. 3 is a schematic cross-sectional view illustrating an electrode according to an embodiment of the present disclosure;
FIG. 4 is a schematic perspective view illustrating a tab according to an embodiment of the present disclosure;
FIG. 5 is a schematic cross-sectional view illustrating an electrode according to an embodiment of the present disclosure;
FIG. 6 is a schematic cross-sectional view illustrating an electrode according to an embodiment of the present disclosure;
FIG. 7 is a schematic cross-sectional view illustrating an electrode according to an embodiment of the present disclosure;
FIG. 8 is a schematic cross-sectional view illustrating an electrode according to an embodiment of the present disclosure;
FIG. 9 is a schematic cross-sectional view illustrating an electrode according to an embodiment of the present disclosure; and
FIG. 10 is a schematic cross-sectional view illustrating an electrode according to an embodiment of the present disclosure.

### DETAILED DESCRIPTION

Example embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey implementations to those skilled in the art.

In the drawing figures, the dimensions of layers and regions may be exaggerated for clarity of illustration. It will also be understood that when a layer or element is referred to as being "on" another layer or substrate, it can be directly on the other layer or substrate, or intervening layers may also be present. In addition, it will also be understood that when a layer is referred to as being "between" two layers, it can be the only layer between the two layers, or one or more intervening layers may also be present. Like reference numerals refer to like elements throughout.

Terms or words used in the present specification and claims are not to be narrowly interpreted according to their general or dictionary meanings and should be interpreted as having meanings and concepts that are consistent with the technical idea of the present disclosure on the basis of the principle that an inventor can be his/her own lexicographer to appropriately define concepts of terms to describe embodiments in the best way. The embodiments described in this specification and the configurations illustrated in the drawings are only some embodiments of the present disclosure and do not represent all of the aspects, features, and embodiments of the present disclosure. Therefore, it should be understood that there may be various equivalents and modifications that can replace or modify one or more embodiments or features therein described herein at the time of filing this application.

In addition, when used in the present specification, "comprise" and "include" and/or "comprising" and "including" specify the presence of the stated features, numbers, steps, operations, members, elements, and/or groups thereof and do not preclude the presence or addition of one or more other features, numbers, operations, members, elements, and/or groups thereof.

In addition, the accompanying drawings are not illustrated to scale and the dimensions of some components may be exaggerated. In addition, the same reference numbers may denote the same components in different embodiments.

When two compared objects are "the same," it means that they are "substantially the same." Accordingly, "substantially the same" may include a deviation that is considered low in the art, for example, a deviation within 5%. In addition, when a certain parameter is referred to as being uniform in a given region, it may mean that it is uniform in terms of an average.

Although "first," "second," and the like are used to describe various components, these components are not limited by these terms. These terms are used only to distinguish one component from another, and unless otherwise stated, a first component may be a second component.

Throughout the specification, unless otherwise stated, each element may be singular or plural.

When any component is disposed "above (or below)" a component or "on (or under)" the component, it may mean not only that any component is disposed in contact with an upper surface (or lower surface) of the component, but also that another component may be interposed between the component and any component disposed on (or under) the component.

In addition, when a first component is described as being "connected," "coupled," or "joined" to a second component, the components may be directly connected or joined, but it should be understood that a third component may be "interposed" between the components, or the components may be "connected," "coupled," or "joined" through the third component. In addition, when a first component is described as being "electrically coupled to" a second component, this includes not only a case in which the first component is "directly coupled" to the second component, but also a case in which the first component is "coupled" to the second component with a third component interposed therebetween.

When referring to "A and/or B" throughout the specification, this means A, B or A and B unless otherwise specified. In other words, the term "and/or" includes all or any combination of the plurality of listed items. When referring to "C to D," this means C or more and D or less unless otherwise specified.

Terminology used herein is intended to describe embodiments of the present disclosure and is not intended to limit the present disclosure.

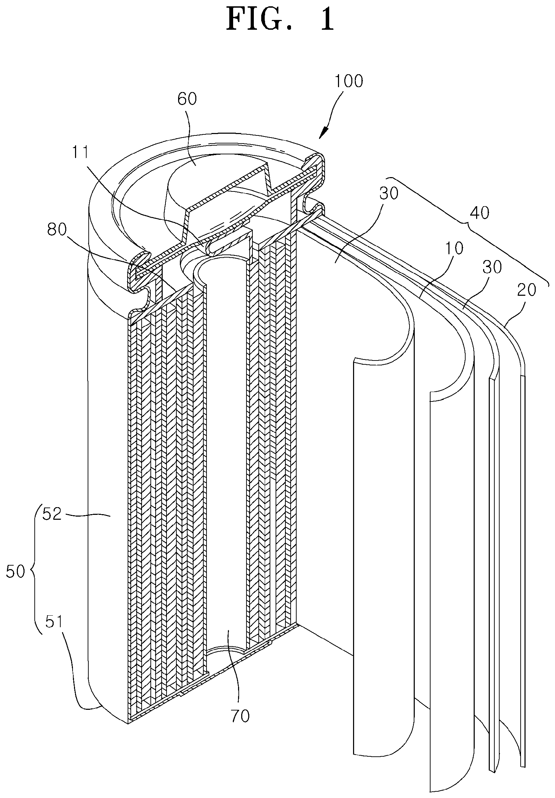

FIG. 1 is a schematic cross-sectional view illustrating a cylindrical secondary battery according to an embodiment of the present disclosure.

As illustrated in FIG. 1, a cylindrical lithium ion secondary battery 100 according to an embodiment of the present disclosure may include a cylindrical case 50, an electrode assembly 40, and/or a cap assembly 60. In addition, the cylindrical lithium ion secondary battery 100 may further include a center pin 70 in some cases. In addition, in the secondary battery 100 according to the embodiment of the present disclosure, since the cap assembly 60 performs a current interrupt operation, the cap assembly 60 may be referred to as a current interrupt device in some cases.

The cylindrical case 50 may include a substantially circular bottom portion 51 and a cylindrical side wall 52 that extends a predetermined length upward from a circumferential surface of the bottom portion 51. During a manufacturing process of the secondary battery 100, the top of the cylindrical case 50 is open. Therefore, during an assembly process of the secondary battery 100, the electrode assembly 40 and the center pin 70 may be inserted into the cylindrical case 50 together with an electrolyte. The cylindrical case 50 may be formed of, e.g., steel, stainless steel, aluminum, an aluminum alloy, or an equivalent thereof.

In addition, the cylindrical case 50 may include a beading part recessed inward at the bottom of the cap assembly 60 and a crimping part bent inward at the top of the cap assembly 60 so that the cap assembly 60 is not separated outward.

The electrode assembly 40 may be accommodated inside the cylindrical case 50. The electrode assembly 40 may include a negative electrode plate 20 in which a negative current collection plate is coated with a negative electrode active material (e.g., graphite, carbon, etc.), a positive electrode plate 10 in which the positive electrode current collection plate is coated with a positive electrode active material (e.g., transition metal oxide (e.g., LiCoO₂, LiNiO₂, LiMn₂O₄, etc.)), and a separator 30 positioned between the negative electrode plate 20 and the positive electrode plate 10 to prevent a short and enable only the movement of lithium ions. In addition, the negative electrode plate 20, the positive electrode plate 10, and the separator 30 may be wound in a substantially cylindrical shape. For example, the negative electrode collection plate may be formed of copper (Cu) foil, the positive electrode collection plate may be formed of aluminum (Al) foil, and the separator 30 may be formed of polyethylene (PE) or polypropylene (PP).

In addition, a negative electrode tab that extends to protrude a predetermined length downward may be welded to the negative electrode plate 20, and a positive electrode tab 11 that extends to protrude a predetermined length upward may be welded to the positive electrode plate 10, but the reverse is also possible. In addition, for example, the negative electrode tab may be formed of copper (Cu) or nickel (Ni), and the positive electrode tab 11 may be formed of aluminum (Al).

For example, the negative electrode tab of the electrode assembly 40 may be welded to the bottom portion 51 of the cylindrical case 50. Therefore, the cylindrical case 50 may operate as a negative electrode. In another example, the positive electrode tab 11 may be welded to the bottom portion 51 of the cylindrical case 50, and in this case, the cylindrical case 50 may operate as a positive electrode.

In addition, a first insulating plate that is coupled to the cylindrical case 50 and has a first lower hole formed in a central portion thereof and a second lower hole formed outside the central portion may be interposed between the electrode assembly 40 and the bottom portion 51. The first insulating plate functions to prevent the electrode assembly 40 from being in electrical contact with the bottom portion 51 of the cylindrical case 50. In particular, the first insulating plate functions to prevent the positive electrode plate 10 of the electrode assembly 40 from being in electrical contact with the bottom portion 51. Here, when a large amount of gas is generated due to an abnormality of the secondary battery, the first lower hole functions to allow gas to quickly move upward through the center pin 70, and the second lower hole functions to allow the negative electrode tab to pass therethrough and be welded to the bottom portion 51.

In addition, a second insulating plate 80 that is coupled to the cylindrical case 50 and has a first hole formed in a central portion thereof and a plurality of second holes formed outside the central portion may be interposed between the electrode assembly 40 and the cap assembly 60. The second insulating plate 80 functions to prevent the electrode assembly 40 from being in electrical contact with the cap assembly 60. In particular, the second insulating plate 80 functions to prevent the negative electrode plate 20 of the electrode assembly 40 from being in electrical contact with the cap assembly 60. Here, when a large amount of gas is generated due to an abnormality of the secondary battery, the first hole functions to allow gas to quickly move to the cap assembly 60, and the second hole functions to allow the positive electrode tab to pass therethrough and be welded to the cap assembly 60. In addition, the remaining second hole(s) functions to allow an electrolyte to quickly flow into the electrode assembly 40 during an electrolyte injection process.

In addition, diameters of the first holes of the first insulating plate and the second insulating plate 80 may be formed to be smaller than a diameter of the center pin 70, thereby preventing the center pin 70 from being in electrical contact with the bottom portion 51 of the cylindrical case 50 or the cap assembly 60 due to an external impact.

The center pin 70 may have a circular pipe shape with a hollow and may be coupled to a substantial central portion of the electrode assembly 40. The center pin 70 may be formed of, e.g., steel, stainless steel, aluminum, an aluminum alloy, or polybutylene terephthalate. The center pin 70 functions to suppress deformation of the electrode assembly 40 during charging and discharging of the secondary battery and functions as a movement passage for gas generated inside the secondary battery. For example, the center pin 70 may be omitted in some cases.

The cap assembly 60 may include a cap up. The cap assembly 60 may further include at least one of a cap down, a vent, and an insulator. The cap assembly 60 is coupled to an opening of the case 50 to seal the electrode assembly 40 inside the case 50.

However, the case may be formed in any of various shapes such as a circular shape, a pouch shape, etc. In addition, the case may be formed of a metal such as aluminum, an aluminum alloy, nickel-plated steel, or a laminate film or plastic that forms a pouch.

Meanwhile, as described above, the electrode assembly 40 may include a negative electrode formed of the negative electrode plate 20, a positive electrode formed of the positive electrode plate 10, and the separator 30 positioned between the negative electrode and the positive electrode. In addition, the electrode assembly 40 may be accommodated in the cylindrical case 50 together with an electrolyte. Hereinafter, the electrode assembly 40 and the electrolyte will be described.

As the positive electrode active material, a compound capable of reversibly intercalating/deintercalating lithium (e.g., a lithiated intercalation compound) may be used. For example, at least one of a composite oxide of lithium and a metal selected from cobalt, manganese, nickel, and a combination thereof may be used.

The composite oxide may be a lithium transition metal composite oxide, and examples thereof may include a lithium nickel oxide, a lithium cobalt oxide, a lithium manganese oxide, a lithium iron phosphate compound, a cobalt-free nickel-manganese oxide, and a combination thereof.

As an example, a compound represented by any one of the following formulas may be used: LiₐA_{1-b}X_{b}O_{2-c}D'_{c}(0.90≤a≤1.8, 0≤b≤0.5, 0≤c≤0.05); LiₐMn_{2-b}X_{b}O_{4-c}D'_{c}(0.90≤a≤1.8, 0≤b≤0.5, 0≤c≤0.05); LiₐNi_{1-b-c}Co_{b}X_{c}O_{2-α}D'_{α}(0.90≤a≤1.8, 0≤b≤0.5, 0≤c≤0.5, 0<α<2); LiₐNi_{1-b-c}Mn_{b}X_{c}O_{2-α}D'_{α}(0.90≤a≤1.8, 0≤b≤0.5, 0≤c≤0.5, 0<α<2); LiₐNi_{b}Co_{c}L¹_{d}GₑO₂(0.90≤a≤1.8, 0≤b≤0.9, 0≤c≤0.5, 0≤d≤0.5, 0≤e≤0.1); LiₐNiG_{b}O₂(0.90≤a≤1.8, 0.001≤b≤0.1); LiₐCoG_{b}O₂(0.90≤a≤1.8, 0.001≤b≤0.1); LiₐMn_{1-b}G_{b}O₂(0.90≤a≤1.8, 0.001≤b≤0.1); LiₐMn₂G_{b}O₄(0.90≤a≤1.8, 0.001≤b≤0.1); LiₐMn_{1-g}G_{g}PO₄(0.90≤a≤1.8, 0≤g≤0.5); Li_{(3-f)}Fe₂(PO₄)₃(0≤f≤2); and LiₐFePO₄(0.90≤a≤1.8).

In the above chemical formula, A may be Ni, Co, Mn, or a combination thereof; X may be Al, Ni, Co, Mn, Cr, Fe, Mg, Sr, V, a rare earth element, or a combination thereof; D' may be O, F, S, P, or a combination thereof; G may be Al, Cr, Mn, Fe, Mg, La, Ce, Sr, V, or a combination thereof; and L1 may be Mn, Al, or a combination thereof.

The positive electrode for a secondary battery may include a current collector and a positive electrode active material layer formed on the current collector. The positive electrode active material layer may include a positive electrode active material and may further include a binder and/or a conductive material.

The content of the positive electrode active material may be in a range of 90 wt% to 99.5 wt% with respect to 100 wt% of the positive electrode active material layer, and the content of each of the binder and the conductive material is in a range of 0.5 wt% to 5 wt% with respect to 100 wt% of the positive electrode active material layer.

Al may be used for the current collector.

The negative electrode active material may include a material capable of reversibly intercalating/deintercalating lithium ions, a lithium metal, an alloy of lithium metal, a material capable of doping and dedoping lithium, or a transition metal oxide.

The material capable of reversibly intercalating/deintercalating lithium ions may be a carbon negative electrode active material, which may include, e.g., crystalline carbon, amorphous carbon, or a combination thereof. Examples of the crystalline carbon may include graphite, such as natural graphite or artificial graphite, and examples of the amorphous carbon may include soft carbon, hard carbon, a meso-phase pitch carbide, sintered coke, and the like.

A Si negative electrode active material or a Sn negative electrode active material may be used for the material capable of being doped and undoped with lithium. The Si negative electrode active material may be silicon, a silicon-carbon composite, SiOₓ (0<x<2), a Si alloy, or a combination thereof.

The silicon-carbon composite may be a composite of silicon and amorphous carbon. According to an embodiment, the silicon-carbon composite may be in the form of a silicon particle and amorphous carbon with which the surface of the silicon particle is coated.

The silicon-carbon composite may further include crystalline carbon. For example, the silicon-carbon composite may include a core including crystalline carbon and silicon particle and an amorphous carbon coating layer on the surface of the core.

The negative electrode for the secondary battery 100 may include a current collector, and a negative electrode active material layer formed on the current collector. The negative electrode active material layer may include a negative electrode active material and may further include a binder and/or a conductive material.

For example, the negative electrode active material layer may include 90 wt % to 99 wt % of a negative electrode active material, 0.5 wt % to 5 wt % of a binder, and 0 wt % to 5 wt % of a conductive material.

A non-aqueous binder, an aqueous binder, a dry binder, or a combination thereof may be used for the binder. When an aqueous binder is used for the negative electrode binder, a cellulose compound capable of imparting viscosity may be further included.

As the negative electrode current collector, one selected from copper foil, nickel foil, stainless steel foil, titanium foil, nickel foam, copper foam, conductive metal-coated polymer substrate, and a combination thereof may be used.

An electrolyte for a secondary battery 100 may include a non-aqueous organic solvent and a lithium salt.

The non-aqueous organic solvent acts as a medium through which ions involved in the electrochemical reaction of the battery can move.

The non-aqueous organic solvent may be a carbonate, ester, ether, ketone, alcohol, aprotic solvent, or a combination thereof and may be used alone or in combination of two or more thereof.

In addition, when a carbonate solvent is used, a mixture of cyclic carbonate and chain carbonate may be used.

Depending on the type of a secondary battery 100, the separator may be present between the positive electrode and the negative electrode. The separator may be formed of polyethylene, polypropylene, polyvinylidene fluoride, or a multilayer film including two or more layers thereof.

The separator 30 may include a porous substrate and a coating layer containing an organic material, an inorganic material or a combination thereof positioned on one surface or both surfaces of the porous substrate.

The organic material may include a polyvinylidene fluoride polymer or a (meth)acrylic polymer.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof, but is not limited thereto.

The organic material and the inorganic material may be present by being mixed in one coating layer or may be present in the form of a coating layer including an organic material and a coating layer including an inorganic material that are stacked on each other.

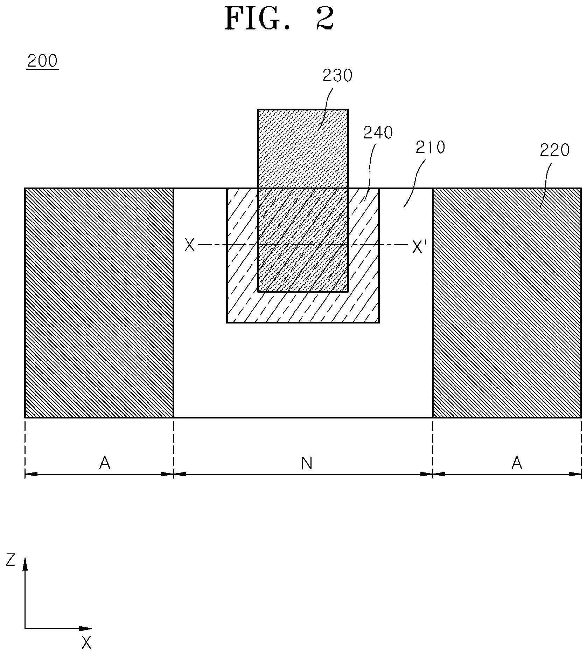

FIG. 2 is a schematic top view illustrating an electrode according to an embodiment of the present disclosure.

In FIG. 2, "200" denotes an electrode according to an embodiment of the present disclosure. In addition, in FIG. 2, an x-axis represents a width direction of a tab 230, and a z-axis represents a longitudinal direction of the tab 230.

As described in FIG. 1, the secondary battery 100 according to an embodiment of the present disclosure includes the electrode assembly 40 and the case 50 in which the electrode assembly 40 is accommodated. In this case, the electrode assembly 40 includes the electrode 200 (e.g., the negative electrode and/or positive electrode described with reference to FIG. 1).

The electrode assembly 40 includes the electrode 200 and the separator 30 (e.g., the separator described in FIG. 1). The electrode 200 may include (e.g., may be) a negative electrode and/or a positive electrode. For example, the electrode assembly 40 may include an electrode stack formed by stacking the negative electrode, the positive electrode, and the separator 30 disposed between the negative electrode and the positive electrode. For example, the electrode assembly 40 may be formed by winding the electrode stack. In this way, the electrode assembly 40 may form a jelly roll. Hereinafter, an example in which the electrode assembly 40 forms a jelly roll will be described. However, the electrode assembly 40 may be formed as a stack type.

Referring to FIG. 2, the electrode 200 may include a substrate 210 and the tab 230 attached onto a surface of the substrate 210. In this case, the substrate 210 may include the current collector described with reference to FIG. 1.

For example, the electrode 200 may include the substrate 210 and an active material layer 220 formed on at least one surface of the substrate 210. When the electrode 200 is a positive electrode, the substrate 210 may include, e.g., aluminum. When the electrode 200 is a negative electrode, the substrate 210 may include, e.g., copper. Detailed description of the substrate 210 and/or the active material layer 220 is the same as or similar to that described with reference to FIG. 1.

For example, the active material layer 220 may be formed on one surface of the substrate 210. In another example, the active material layer 220 may be formed on both surfaces (e.g., opposite surfaces) of the substrate 210. In addition, the active material layer 220 may be formed on a portion (e.g., on only a portion) of at least one surface of the substrate 210.

An area in which the active material layer 220 is formed on the substrate 210 is referred to as a coated portion A. An area in which the active material layer 220 is not formed on the substrate 210 is referred to as an uncoated portion N.

In FIG. 2, "230" denotes a tab. The tab 230 may be attached onto the substrate 210 and may extend outward from the substrate 210. For example, the tab 230 may have a first side attached onto the substrate 210 and a second side (i.e., a side opposite the first side) extending outward from the substrate 210. For example, referring to FIG. 2, a longitudinal direction of the tab 230 (e.g., the z-axis in FIG. 2) may extend perpendicularly to a longitudinal direction of the substrate 210 (e.g., the x-axis in FIG. 2). For example, the tab 230 may be attached onto the uncoated portion N. For example, the tab 230 may be attached to the substrate 210 by welding one side to the uncoated portion N. In this case, an upper surface of the electrode 200 is a surface of a side of the electrode 200 on which the tab 230 is attached.

The tab 230 electrically connects the electrode 200 to the outside. Therefore, the tab 230 may function as an electron movement passage through which electrons flow into the electrode plate (e.g., the negative electrode plate and the positive electrode plate described with reference to FIG. 1) or flow out of the electrode plate.

For example, when the secondary battery 100 is formed in a cylindrical shape, the tab 230 may be connected to the current collection plate. For example, when the electrode 200 is a positive electrode, the tab 230 may be connected to the positive electrode collection plate. For example, when the electrode 200 is a negative electrode, the tab 230 may be connected to the negative electrode collection plate. For example, when the secondary battery 100 is formed in a pouch shape, the tab 230 may be electrically connected to a lead tab.

The electrode 200 may repeat the activity of swelling and shrinking according to repeated charging and discharging. In this case, as described with reference to FIG. 1, the positive electrode and the negative electrode may be formed in a state of overlapping and being wound. The positive electrode and/or the negative electrode may mutually apply a pressure during the swelling and shrinking process. In particular, during such a process, the tab 230 may apply a pressure to the substrate 210 on which the tab 230 is attached and/or the electrode adjacent to the tab 230. Therefore, the uncoated portion N, i.e., the uncoated portion N adjacent to the tab 230, receives continuous stress. As a result, cracking may occur in the electrode. As a result, the resistance of the secondary battery 100 increases, thereby reducing the charge and discharge efficiencies and/or lowering the stability of the secondary battery 100.

To prevent cracking on the substrate 210, the electrode 200 according to an embodiment of the present disclosure may further include a first protective layer 240. The first protective layer 240 covers the tab 230 and is provided on the substrate 210. For example, as illustrated in FIG. 2, the first protective layer 240 may cover the tab 230 and may be attached to the substrate 210, e.g., the first protective layer 240 may be attached onto the uncoated portion N. For example, referring to FIG. 2, the first protective layer 240 may completely cover (e.g., overlap) a portion of the tab 230 that is attached to the uncoated portion N and may extend beyond the tab 230 in the longitudinal direction of the substrate 210 (e.g., in the x-axis) to directly contact the substrate 210 and attach to the uncoated portion N of the substrate 210.

In another example, the first protective layer 240 may be provided not only on the substrate 210 while covering the tab 230, but also on the active material layer 220 by extending on the substrate 210. That is, the first protective layer 240 may extend continuously to be attached onto the uncoated portion N and the coated portion A adjacent to the uncoated portion N.

If the shape of the tab 230 is the same in a direction perpendicular to the substrate 210 (e.g., if the width of the tab 230 in the x-axis is constant), the first protective layer 240 may form a space between the tab 230 and the substrate 210 (e.g., the first protective layer 240 may not fully fit into and cover a corner between a lateral sidewall of the tab and an upper surface of the substrate). As such, a void may be formed between the first protective layer 240, the tab 230, and the substrate 210, where the substrate 210 may not be protected by the first protective layer 240.

In other words, the first protective layer 240 may not be attached to the entire side surface (e.g., upper surface) of the substrate 210 while moving from an upper surface of the tab 230 to the substrate 210, and attachment strength to the tab 230 may be lowered. In addition, due to the formed void, the substrate 210 may be intensively stressed by the tab 230, thereby causing cracking.

In contrast, the tab 230 according to an embodiment of the present disclosure may have a varied width in the x-axis. Therefore, the first protective layer 240 may conformally cover the tab 230 with improved coverage of the lateral sidewall of the tab 230 and an upper surface of the substrate 210, as well as the corner therebetween, thereby suppressing cracking.

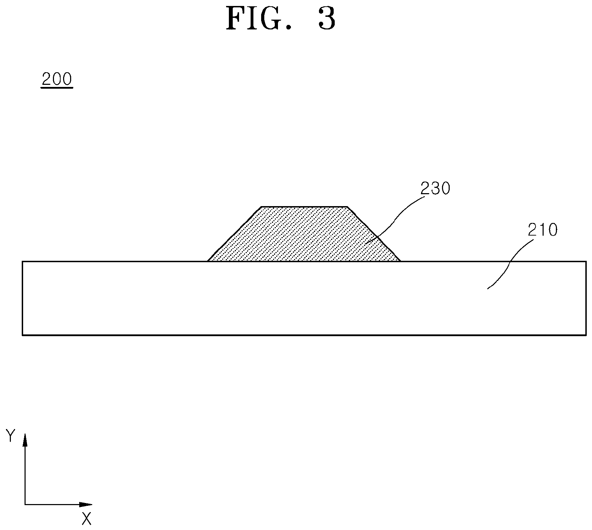

FIGS. 3 and 5 to 10 described below illustrate cross sections along line X-X' illustrated in FIG. 2.

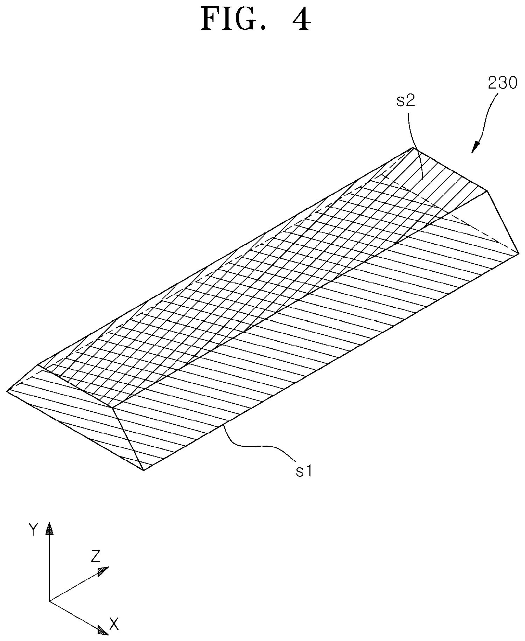

FIG. 3 is a schematic cross-sectional view illustrating the electrode 200 according to an embodiment of the present disclosure. FIG. 4 is a schematic perspective view illustrating the tab 230 according to an embodiment of the present disclosure. In FIGS. 3 and 4, the x-axis represents the width direction of the tab 230, the y-axis represents the direction perpendicular to the substrate 210, and the z-axis represents the longitudinal direction of the tab 230.

Referring to FIGS. 3-4, the electrode 200 includes the substrate 210 and the tab 230 attached onto one surface of the substrate 210.

As illustrated in FIG. 4, the tab 230 may include a first cross section s1 positioned at a first height in the vertical direction (y) perpendicular to the substrate 210, and a second cross section s2 positioned at a second height in the vertical direction (y) from the substrate 210. The first cross section s1 and the second cross section s2 have different cross-sectional areas.

The tab 230 may include a plurality of cross sections positioned at different heights in the vertical direction (y) perpendicular to the substrate 210. That is, the cross sections are parallel to the upper surface of the substrate 210. In this case, the height represents a straight-line distance (e.g., a vertical distance along the y-axis) of the cross section from the substrate 210. That is, when the height is high, a distance from the substrate 210 to the corresponding cross section is long, and when the height is low, the distance from the substrate 210 to the corresponding cross section is short. The tab 230 may be formed in a three-dimensional shape by combining these cross sections.

For example, as illustrated in FIG. 4, the cross sections may include the first cross section s1 and the second cross section s2. The first cross section s1 may be positioned at the first height from the substrate 210 (e.g., at a short vertical distance from the substrate 210). The second cross section s2 may be positioned at the second height from the substrate 210 (e.g., at a vertical distance from the substrate 210 that is longer than that of the first cross section s1).

For example, the second height may be greater than the first height (e.g., relative to the substrate 210). For example, the first height may be formed to be zero or more and less than a total thickness of the tab 230. In this case, the thickness of the tab 230 is a height from the upper surface of the substrate 210 to the upper surface of the tab 230 in the vertical direction (y) perpendicular to the substrate 210. For example, the second height may be formed to be more than zero and the thickness of the tab 230 or less. For example, FIG. 4 illustrates an example in which the first height is zero and the second height is equal to the thickness of the tab 230.

Referring to FIG. 4, the second cross section s2 has a smaller cross-sectional area than the first cross section s1. For example, FIG. 4 illustrates an example in which the cross-sectional area of the second cross section s2 corresponding to the upper surface of the tab 230 is smaller than the cross-sectional area of the first cross section s1 corresponding to a lower surface of the tab 230. In this case, the lower surface of the tab 230 is a surface of the tab 230 in contact with the upper surface of the substrate 210. In this case, the upper surface of the tab 230 is a surface of the tab 230 in contact with the surface perpendicular to the vertical direction (y) at the uppermost portion of the tab 230 in the vertical direction (y) perpendicular to the substrate 210 (e.g., the upper surface of the tab 230 is a surface of the tab 230 that is opposite the lower surface of the tab 230).

**In** this way, the tab 230 may be formed to have a cross-sectional area that gradually decreases from the lower surface to the upper surface thereof. For example, the tab 230 may be formed to have a cross-sectional area that decreases linearly from the lower surface to the upper surface thereof (e.g., the tab 230 may have a trapezoidal cross-section in the xy-plane). **In** another example, the tab 230 may be formed to have a cross-sectional area that decreases in a stepwise manner from the lower surface to the upper surface thereof (e.g., the tab 230 may have a stepped cross-section in the xy-plane). **In** yet another example, the tab 230 may be formed to have a curved side surface that connects the lower surface to the upper surface thereof (e.g., the tab 230 may have a bow-shaped cross-section in the xy-plane). In this case, the upper surface may, for example, correspond to a point positioned at the uppermost portion of the tab 230.

Therefore, the tab 230 may be, for example, formed in at least one of bow-shaped, triangular, trapezoidal, and step-like ( 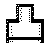 ) cross-sectional shapes perpendicular to the substrate 210. FIGS. 3 and 4 illustrate an example in which the cross section perpendicular to the substrate 210 is formed in a trapezoidal shape.

In this way, the electrode 200 according to an embodiment of the present disclosure includes the tab 230 with a deformed shape. Therefore, the tab 230 can reduce the stress applied to the substrate 210. Hereinafter, the electrode 200 to which the tab 230 is applied will be described.

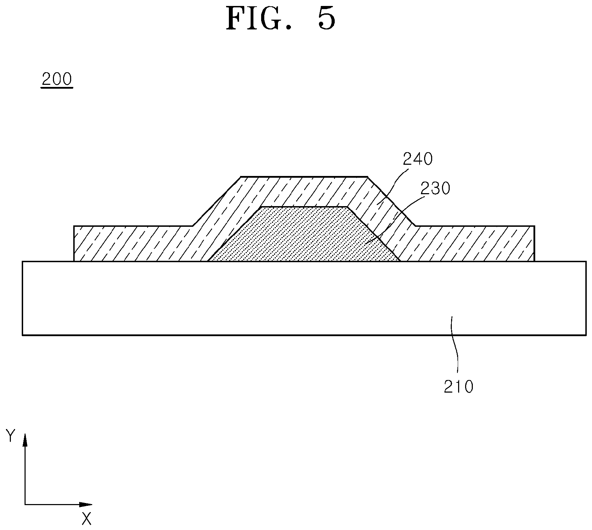

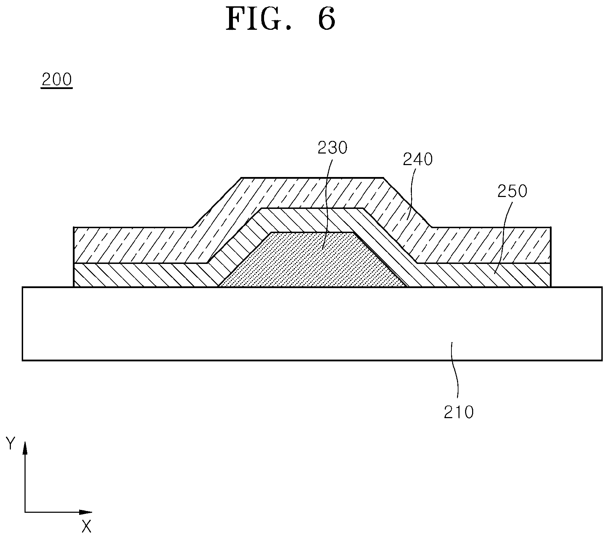

FIG. 5 is a schematic cross-sectional view illustrating the electrode 200 according to an embodiment of the present disclosure. FIG. 6 is a schematic cross-sectional view illustrating the electrode 200 according to a modified embodiment of the present disclosure. In FIGS. 5 and 6, "200" denotes the electrode according to an embodiment of the present disclosure.

Referring to FIGS. 5 and 6, the electrode 200 may further include the protective layer 240 provided on the substrate 210. For example, the electrode 200 may further include the protective layer 240 covering the tab 230 and provided on one surface of the substrate 210. For example, referring to FIG. 5, the protective layer 240 may continuously cover the upper surface of the tab 230 (i.e., a surface of the tab 230 opposite the lower surface of the tab 230 and facing away from the substrate 210), lateral surfaces (i.e., sidewalls) of the tab 230 connecting the upper surface of the tab 230 to the lower surface of the tab 230, and a portion of the upper surface of the substrate 210 immediately adjacent to the tab 230. A width of the protective layer 240 may be formed to be greater than a width of the tab 230 (e.g., the protective layer 240 may cover the tab 230 and may extend beyond the tab 230 on opposite sides of the tab 230 in the x-axis).

For example, the protective layer 240 may include an insulating material (e.g. electrically insulating). Therefore, the protective layer 240 can prevent a short in the electrode 200 and protect the tab 230 and/or the substrate 210. The insulating material is a material having insulating properties and includes at least one selected from polysulfone, polyurethane, polyamide, 6,6 nylon, polycarbonate (PC), polytetrafluoroethylene (PTFE), polymethyl methacrylate (PMMA), polyethylene terephthalate (PET), and a combination thereof.

For example, the protective layer 240 may include or consist of or comprise an insulating material (e.g. electrically insulating) and a heat-resistant material (e.g. thermally insulating). For example, the protective layer 240 may include at least one selected from PET, polyethylene naphthalate (PEN), polyvinylidene fluoride (PVDF), and a combination thereof.

As described in FIGS. 3 and 4, the tab 230 is formed in a structure in which the cross-sectional area narrows from the lower surface toward the upper surface thereof (e.g., the lateral sidewall of the tab 230 forms an obtuse angle with the upper surface of the substrate 210). With this structure, the protective layer 240 may be attached to the tab 230 without any area separated from the tab 230 from the upper surface to the lower surface of the tab 230 despite the thickness formed by the tab 230. Therefore, the protective layer 240 may be attached without a space lifted from the tab 230 and the substrate 210.

For example, as illustrated in FIG. 5, the protective layer 240 covers the tab 230 and is on (e.g., directly on) the substrate 210. For example, the protective layer 240 may be provided on the substrate 210 by being thermally fused to the upper surface of the substrate 210 entirely or partially.

In another example, as illustrated in FIG. 6, the electrode 200 may further include an adhesive layer 250 positioned between the protective layer 240 and the tab 230. The protective layer 240 may cover the tab 230 and may be provided on (e.g., attached to) the substrate 210 through the adhesive layer 250.

The adhesive layer 250 includes an adhesive material. Therefore, the adhesive layer 250 attaches the protective layer 240 to the tab 230. In addition, the adhesive layer 250 attaches the protective layer 240 to the substrate 210. In this case, the adhesive material may be, e.g., at least one selected from an acrylic adhesive, a rubber adhesive, a silicone adhesive, a hot melt adhesive, and a combination thereof.

With this structure, the electrode 200 according to an embodiment of the present disclosure may increase attachment strength between the tab 230, the substrate 210, and the protective layer 240. Furthermore, the electrode 200 may minimize the size of a space formed between the protective layer 240, the substrate 210, and the tab 230 or eliminate the space by the protective layer 240 connected from the upper surface of the tab 230 to the substrate 210. The substrate 210 may be protected by the protective layer 240 because a portion exposed by the space is not present or minimized. Therefore, the protective layer 240 may prevent stress from being concentrated on the substrate 210. In addition, the protective layer 240 may reduce elongation of a local area (e.g., a boundary with the tab 230) of the substrate 210. In addition, the protective layer 240 may prevent cracking on the substrate 210.

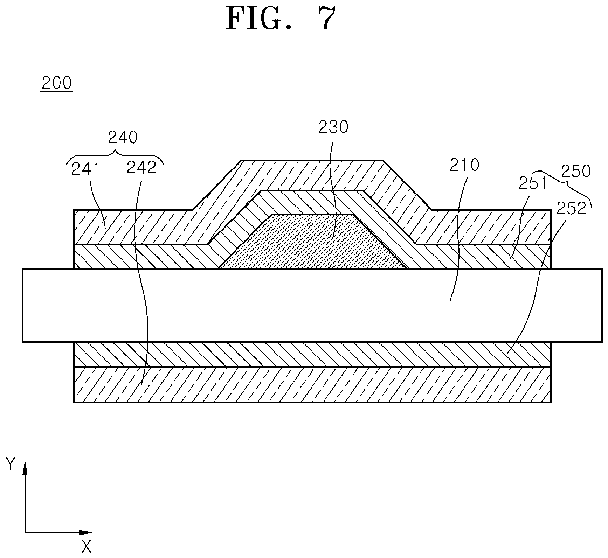

FIG. 7 is a schematic cross-sectional view illustrating the electrode 200 according to an embodiment of the present disclosure.

Referring to FIG. 7, the electrode 200 may include the protective layer 240. The protective layer 240 may include a first protective layer 241 and a second protective layer 242. For example, the first protective layer 241 may cover the tab 230 and may be provided on one surface of the substrate 210, and the second protective layer 242 may be provided on the other surface of the substrate 210 (e.g., the first and second protective layers 241 and 242 may be on opposite surfaces of the substrate 210).

For example, the electrode 200 may include the first protective layer 241 provided on the one surface of the substrate 210 and the second protective layer 242 provided on the other surface of the substrate 210. That is, the first protective layer 241 covers the tab 230 and is provided on the upper surface of the substrate 210, and the second protective layer 242 is provided on the lower surface of the substrate 210 (e.g., the substrate 210 may be between the tab 230 and the second protective layer 342).

For example, the second protective layer 242 may be on the other surface (e.g., lower surface) of the substrate 210 to increase the strength of the substrate 210. In another example, the second protective layer 242 may reduce a thickness difference between the uncoated portion N and the coated portion A caused by the thickness of the active material layer 220. Therefore, the second protective layer 242 may more effectively prevent cracking on the substrate 210.

Referring to FIG. 7, the electrode 200 may further include the adhesive layer 250. For example, the electrode 200 may further include a first adhesive layer 251 that adheres the one surface of the substrate 210 and the first protective layer 241. For example, the electrode 200 may further include a second adhesive layer 252 that adheres the other surface of the substrate 210 and the second protective layer 242. However, the adhesive layer 250 may be omitted, e.g., and the first protective layer 241 may be thermally fused to the one surface of the substrate 210 by thermal fusion, and the second protective layer 242 may be adhered to the other surface of the substrate 210 by the adhesive layer 252. In another example, the first protective layer 241 may be thermally fused to the one surface of the substrate 210 by thermal fusion, and the second protective layer 242 may be adhered to the substrate 210 by the second adhesive layer 252. In yet another example, the first protective layer 241 may be adhered to the one surface of the substrate 210 by the first adhesive layer 251, and the second protective layer 242 may be thermally fused to the other surface of the substrate 210 by thermal fusion.

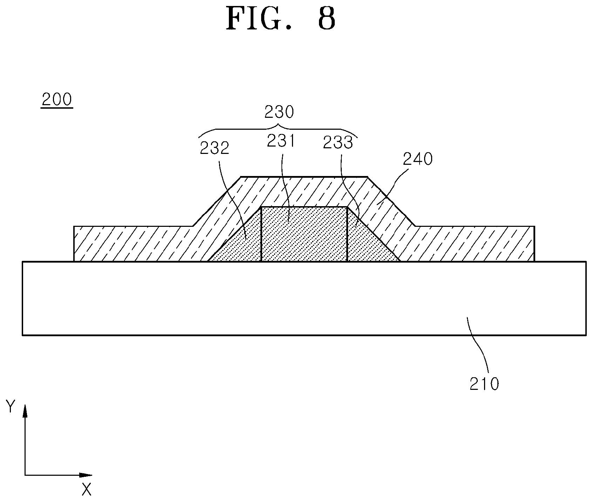

FIGS. 8 to 10 below describe various shapes of the tab 230 as examples. Although the adhesive layer 250 is omitted in FIGS. 8 to 10, it is for convenience of description, and the adhesive layer 250 may be applied to at least one of the examples of FIGS. 8 to 10.

FIG. 8 is a schematic cross-sectional view illustrating the electrode 200 according to an embodiment of the present disclosure.

For example, referring to FIG. 8, the tab 230 according to an embodiment of the present disclosure may include a first tab 231 and second tabs 232 and 233 provided at one or more sides of the first tab 231.

For example, the first tab 231 may be formed to have a rectangular cross-section in the xy-plane. Therefore, the first tab 231 may be formed to have the same cross-sectional area in a thickness direction (vertical direction (y-axis) perpendicular to the substrate 210) of the tab 230. For example, the first tab 231 may be formed in a polygonal pillar shape. For example, the first tab 231 may be formed in a rectangular parallelepiped shape.

The second tabs 232 and 233 may be provided at one side (e.g., respective opposite sides) of the first tab 231 so that the overall combined shape of the first tab 231 and the second tabs 232 and 233 may be formed in the shape of the tab 230 described in FIGS. 2 to 7. For example, as illustrated in FIG. 8, each of the second tabs 232 and 233 includes an inclined surface formed from an upper surface of the first tab 231 to the substrate 210. In another example, each of the second tabs 232 and 233 may include a stepped surface formed from the upper surface of the first tab 231 to the substrate 210. In yet another example, each of the second tabs 232 and 233 may include a curved surface formed from the upper surface of the first tab 231 to the substrate 210.

For example, as illustrated in FIG. 8, the second tabs 232 and 233 may be formed at both sides (e.g., respective opposite sides) of the first tab 231. **In** another example, the second tabs may be formed only at one side of the first tab 231 or formed at both sides of the first tab 231.

The second tabs 232 and 233 may include the same material as the first tab 231. For example, when the first tab 231 includes a metallic material, the second tabs 232 and 233 may also include a metallic material.

The second tabs 232 and 233 may be formed by injecting a molten metal or solder paste into one or more sides of the first tab 231. For example, the protective layer 240 may be attached onto the substrate 210 while covering the first tab 231. **In** this case, the space surrounded by the first tab 231, the protective layer 240, and the substrate 210 is formed as described above. The second tabs 232 and 233 may be formed by injecting a molten metal or solder paste into such a space. Therefore, the second tabs 232 and 233 may be formed in an appropriate shape so that the substrate 210 is not exposed.

With this structure, the electrode 200 according to an embodiment of the present disclosure may provide a method that is compatible with a conventionally mass-produced tab and may adapt the characteristics of the tab 230 according to an embodiment of the present disclosure.

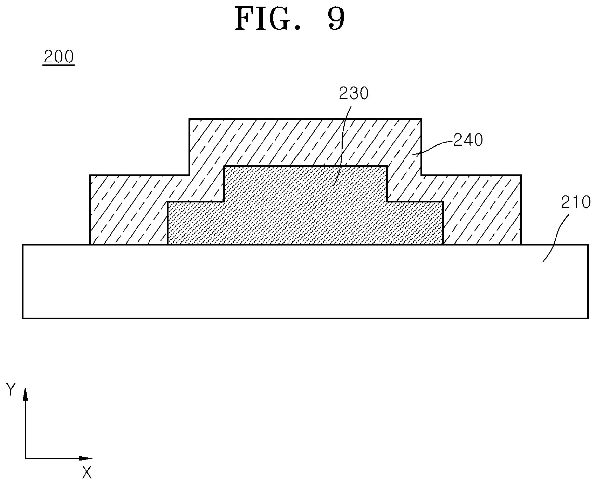

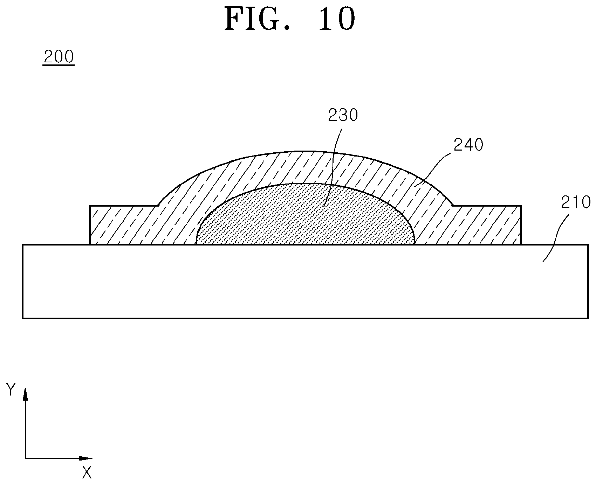

FIG. 9 is a schematic cross-sectional view illustrating an electrode according to an embodiment of the present disclosure. FIG. 10 is a schematic cross-sectional view illustrating an electrode according to an embodiment of the present disclosure. In FIGS. 9 and 10, "200" denotes the electrode according to an embodiment of the present disclosure.

For example, referring to FIGS. 9 and 10, the tab 230 according to an embodiment of the present disclosure may be formed in at least one of bow-shaped, triangular, trapezoidal, and step-like ( 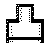 ) cross-sectional shapes perpendicular to the substrate 210.

FIG. 9 illustrates an example in which the cross section of the tab 230 is formed in a step-like shape ( 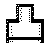 ). In this case, the tab 230 is formed to have stepped side surfaces that connects the upper surface to the lower surface thereof. The protective layer 240 may extend (e.g., conformally) while attached along the stepped surfaces from the upper surface of the tab 230 to the substrate 210. In this case, the tab 230 may improve proper attachment of the protective layer 240 to the tab 230 regardless of the thickness of the tab 230. Therefore, the protective layer 240 may improve the quality of attachment to the tab 230.

FIG. 10 illustrates an example in which the cross section of the tab 230 is formed in a bow-shaped (or semi-oval, or curved) shape. In this case, the tab 230 is formed to have curved side surfaces that connect the upper surface to the lower surface thereof. The protective layer 240 may extend (e.g., conformally) while attached along the curved surfaces from the upper surface of the tab 230 to the substrate 210. Therefore, the protective layer 240 may improve the quality of attachment to the tab 230.

By way of summation and review, in the secondary battery, continuous stress may be transferred to an electrode adjacent to the tab due to high volume expansion caused by repeated charging and discharging. In this case, a movement passage for electrons that participate in the intercalation and/or deintercalation reaction of lithium can be cut off from the electrode due to cracking in the electrodes. Therefore, the electrons cannot move efficiently from the electrode to the tab.

In this case, increased resistance and/or decreased output power of the secondary battery may occur. In addition, loss of usability of the secondary battery or the occurrence of a fire due to heat generation from the secondary battery may occur.

In contrast, according to the present disclosure, it is possible to provide an electrode and/or a secondary battery which have improved stability. According to the present disclosure, it is possible to provide an electrode and/or a secondary battery which can distribute stress applied to a substrate or reduce elongation.

That is, an embodiment of the present disclosure relates to an electrode and/or a secondary battery in which the quality of attachment between a tab and a protective layer is improved. An embodiment of the present disclosure also relates to an electrode and/or a secondary battery in which the occurrence of cracks is suppressed.

Effects of the present disclosure are not limited to those described above, and other effects that are not specifically mentioned herein will be clearly understood by those skilled in the art from the description of the present disclosure above.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the scope of the present invention as set forth in the following claims.

## Claims

1. An electrode, comprising:
a substrate; and
a tab attached onto a surface of the substrate, the tab including:
a first cross section at a first height in a direction perpendicular to the substrate, and
a second cross section at a second height in the direction perpendicular to the substrate, the first cross section and the second cross section having different cross-sectional areas.

2. The electrode of claim 1, wherein the second height is greater than the first height, and the second cross section has a smaller cross-sectional area than the first cross section.

3. The electrode of claim 1 or claim 2, wherein the tab has at least one of bow-shaped, semi-oval, triangular, trapezoidal, and step-like cross-sectional shapes perpendicular to the substrate.

4. The electrode of any one of the preceding claims, wherein the tab includes a first tab and a second tab on at least one side of the first tab.

5. The electrode of claim 4, wherein the second tab includes a molten metal or a solder paste on the at least one side of the first tab.

6. The electrode of claim 4 or claim 5, wherein the second tab includes a same material as the first tab.

7. The electrode of any one of the preceding claims, further comprising a first protective layer covering the tab and contacting the substrate, a width of the first protective layer being greater than a width of the tab.

8. The electrode of claim 7, further comprising a second protective layer, the first protective layer and the second protective layer being on opposite surfaces of the substrate.

9. A secondary battery, comprising:
a case; and
an electrode assembly in the case, the electrode assembly including an electrode and a separator alternately stacked, the electrode being in accordance with any one of the preceding claims.
